# EUROPEAN PATENT SPECIFICATION

(11) **EP 0 537 960 B1**
(45) Date of publication and mention of the grant of the patent: **04.03.1998**
(21) Application number: 92309255.5
(22) Date of filing: 12.10.1992
(51) Int. Cl.: H04B 1/16

(54) **Adjustable bandwidth in a radio telephone**
Verstellbare Bandbreite eines Funktelefons
Radiotéléphone à largeur de bande réglable

(30) Priority: 17.10.1991 US 779347
(43) Date of publication of application: 21.04.1993
(73) Proprietor: NOKIA MOBILE PHONES LTD., 24101 Salo (FI)
(72) Inventor: Kivela, Seppo Kalervo, SF-24240 Salo (FI)
(74) Representative: Frain, Timothy John

(56) References cited:
- US-A- 3 953 802
- US-A- 4 267 605

## Description

The present invention relates to an apparatus for and a method of adjusting the operating bandwidth in a radio telephone for operation in two or more different radio telephone systems.

Radiotelephones, and more particularly cellular radiotelephones are typically used to operate on only one type of cellular telephone systems. In order to provide a possibility for the radio telephone user to switch between different systems, prior art radio telephone receivers also have been equipped with double transceivers. Another possibility is presented in the US-patent no. 4,972,455, where a dual-bandwidth cellular telephone includes a transceiver having a dual bandwidth receiver with different filters in the intermediate frequency (IF) section. The filters have different bandwidths and they are selectively switched, depending on which cellular service is available. In US patent no. (4,972,455) there are two fixed filters which limit the use of the radio telephone to systems and applications determined by the selected filter characteristics. Switches may also give rise to crosstalk effects. Thus there is felt a need for a radio telephone with a more flexible selection of the operating characteristics.

Accordingly, it is an object of the present invention to provide a new method with which it is possible to flexibly adjust the operating bandwidth in a radio telephone receiver.

US 4,267,605 describes a circuit for eliminating interference in a communication receiver. The receiver's centre frequency and bandwidth are continuously variable by a user to eliminate interference.

According to a first aspect of the present invention there is provided an apparatus for adjusting the operating bandwidth of a radio telephone receiver for operation in at least a first radio telephone system having a first channel spacing and a second radio telephone system having a second, narrower channel spacing; comprising first local oscillator means for supplying a first local frequency to first mixing means for channel selection, the mixing means receiving an input signal containing a desired channel signal and neighboring channel signals and producing a first IF-signal to be filtered by first bandpass filtering means; second local oscillator means for supplying a second local frequency to second mixing means, the second mixing means receiving the first IF-signal and producing a second IF-signal to be filtered by second bandpass filtering means wherein in a first mode the first and second local frequencies are selected so that in operation in the first radio telephone system the first and second band pass filtering means attenuate the neighbouring channel signals; means for adjusting the frequency of the first local oscillator means by a first predetermined amount; means for adjusting the frequency of the second local oscillator means by a second predetermined amount; and wherein in a second mode the magnitude of the first frequency adjustment is selected so that in operation in the second radio telephone system the bandwidth of the first bandpass filtering means is offset from the frequency of the desired channel signal and the first bandpass filtering means will attenuate one neighboring channel signal spaced from the desired channel signal by the second channel spacing and pass the desired channel signal (fc) and the opposite neighboring channel signal (fb) spaced from the desired channel signal (fc) by the second channel spacing, and whereby the magnitude of the offset of the second frequency is selected so that the bandwidth of the second bandpass filtering means (7) is offset from the frequency of the desired channel signal (fc) and the second bandpass filtering means (7) will attenuate the opposite neighboring channel signal (FB) and pass the desired channel signal (FC), essentially without neighboring channel signals (fa, FB).

Preferably, the first and second local frequencies are adjusted in the same direction.

Preferably, the first local oscillator means and first mixing means perform channel selection.

Preferably, the first local oscillator means and first mixing means and the second local oscillator means and second mixing means comprise the second and third stages respectively in a three-stage mixing arrangement.

Preferably, the frequencies (1.LO, 2.LO) of the first oscillator means and the second oscillator means are substantially continuously adjustable for example by programmable controlling means.

Preferably, said bandpass filtering means (4, 7) are crystal filters.

Alternatively, the second IF filter is a ceramic filter.

Alternatively, the first IF filter is a saw type filter.

Preferably, three IF stages are employed, the second and third IF filters being ceramic filters.

According to a second aspect of the present invention there is provided a method for adjusting the operating bandwidth of a radio telephone receiver for operation in at least a first radio telephone system having a first channel spacing and a second radio telephone system having a second, narrower channel spacing; comprising; first local oscillator means for supplying a first local frequency to first mixing means , the mixing means receiving an input signal (RFIN) containing a desired channel signal and neighboring channel signals and producing a first IF-signal to be filtered by first bandpass filtering means, second local oscillator means for supplying a second local frequency to second mixing means, the second mixing means receiving the first IF-signal and producing a second IF-signal to be filtered by second bandpass filtering means wherein in a first mode the first and second local frequencies are selected so that in operation in the first radio telephone system the first and second band pass filtering means and attenuate the neighbouring channel signals; the method comprising the steps of adjusting the frequency of the first local oscillator by a first predetermined amount; adjusting the frequency of the second local oscillator a second predetermined amount; and wherein in a second mode said first frequency offset amount is selected so that in operation in the second radio telephone system the bandwidth of the first bandpass filtering means is offset from the frequency of the desired channel signal and the first bandpass filtering means will attenuate one neighboring channel signal spaced from the desired channel signal by the second channel spacing and pass the desired channel signal and the opposite neighboring channel signal spaced from the desired channel signal by the second channel spacing, whereby said second frequency offset amount is selected so that the bandwidth of the second bandpass filtering means is offset from the frequency of the desired channel signal and the second bandpass filtering means will attenuate the opposite neighboring channel signal and pass the desired channel signal, essentially without neighboring channel signals.

An embodiment of the present invention will now be described by way of example, and with reference to the accompanying drawings of which;
Figure 1 is a block diagram of a receiving section according to the present invention; and
Figure 2 is a schematic representation of frequency spectra.

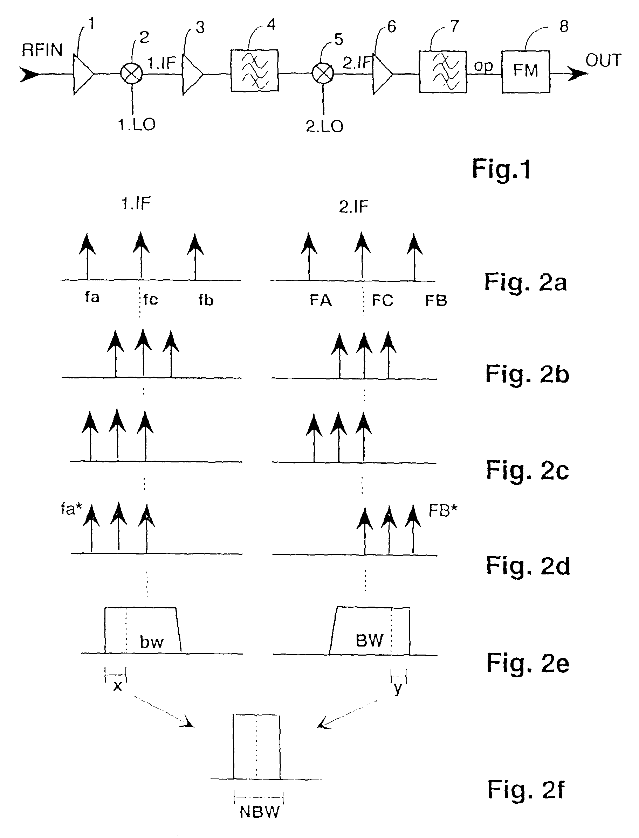

Referring to figure 1 there is schematically illustrated a block diagram of the receiving section in a cellular radio telephone. In the embodiment shown, an RF-signal containing a desired channel signal and neighboring channel signals is connected to the input amplifier 1 and then to a first mixer 2. The mixer 2 also receives a local oscillator signal 1.LO from a first local oscillator (not shown). The mixer 2 outputs a first intermediate frequency signal 1.IF to the bandpass filter 4 and to the second mixer 5. The second mixer 5 also receives a second local oscillator signal 2.LO from a second local oscillator (not shown). The mixer 5 outputs a second intermediate frequency signal 2.IF to the bandpass filter 7 and to the FM-detector 8, which outputs a signal OUT to further circuits of the radio telephone.

Figure 2a shows as an example some channel signals fa, fb and fc with wide channel spacing, i.e. 30 kHz. The RF-signal is in this example 855 MHz, and the first oscillator signal 1.LO is 900 MHz, whereby the first IF-signal 1.IF has a center frequency of 45 MHz. The bandpass filter 4 has a bandwidth bw = 30 kHz (figure 2e), whereby it effectively passes only the desired channel signal fc to the next stage. In the same manner the second stage passes only the desired channel FC in the second IF-signal 2.IF. The frequency of the second oscillator is here 44.545 MHz, whereby the center frequency of 2.IF is 0.455 MHz. In this operation there is no offset of the local oscillator frequencies.

The signal frequencies are related to each other according to the following general expressions:$\text{1.IF = 1.LO - RFIN}$$\text{2.IF = 1.IF - 2.LO}$

Figure 2b shows the situation in a system with narrow channel spacing, i.e. 10 kHz. Without further measures the three channels fa, fb, fc would pass through the first bandpass filter 4. Correspondingly the three channels FA, FB, FC would pass through the second bandpass filter 7, making correct FM-detection of the desired channel fc/FC impossible. The prior art solution is to introduce new filters with narrower bandwidth, i.e. about 10 kHz, instead of the filters 4 and 7 with broad bandwidth.

In the method according to the invention in the first local oscillator and mixer 2 performing the channel selection, the first local oscillator frequency 1.LO is adjusted downwards, in this example by 10 kHz, so that 1.LO = 899.990 MHz. In figure 2c is shown the effect of this, whereby the bandwidth of 1.IF is shifted downwards by 10 kHz (44.990 MHz), and correspondingly the channels fa, fb and fc are shifted to the left in the figure. Correspondingly the channels FA, FB and FC are shifted to the left in the second IF-signal 2.IF. Now the second step is to offset the second local oscillator signal 2.LO, and in this case by 20 kHz, so that 2.LO = 44.525 MHz. This leads to a second IF-signal 2.IF = 0.465 MHz, whereby the channels FA, FB and FC are shifted to the right in figure 2d.

The bandwidths of the bandpass filters 4 and 7 are kept the same, i.e. 30 kHz, cf. figure 2e. Now it can be seen, comparing figures 2d and 2e, that the local oscillator frequencies offsets produce the desired result: In the first filter 4 the channel fa on the left side in figure 2d is effectively attenuated, the two other channels fc and fb being passed to the next stage. In other words, the channel fa is now off-band, which is indicated by the asterisk, fa*. In the second stage, that is in the bandpass filter 7 a corresponding attenuation of channel FB is performed, the channel being out of band, FB*. The net result is that only the desired channel signal FC is now connected to the FM-detector 8.

The local oscillator frequency offsets and the resulting bandwidth reduction is further explained in figures 2e and 2f. In the first filter 4 there remains as an effective bandwidth only a part x of the total bandwidth bw. In a corresponding manner in the second filter 7 there remains as an effective bandwidth only a part y of the total bandwidth BW. These parts x and y in combination produce an "imaginary" filter, with the narrow bandwidth NBW.

In existing radio telephones the first local oscillator usually is digitally controlled, with an adjustable output frequency 1.LO. The digital control is realized with programs contained in the radio telephone controlling microprocessor by known methods.

The method of the present embodiment requires that also the second local oscillator frequency 2.LO is digitally controlled, in the same manner as 1.LO.

The filter at the higher frequency, i.e. 45 MHz, requires a good selectivity. This is achieved by using known crystal filters, which also typically provide unsymmetrical bandwidth edge slopes, as is shown in figure 2e. The characteristic of bw shows on the left side in the figure a steeper edge than the right side. The 1.IF filter can also be of so called saw type. The 2.IF filter is typically a ceramic filter having symmetric characteristics. This leads to the narrow net bandwidth NBW in figure 2f with very sharp edges.

In certain cases it would be conceivable to provide receiver with three IF stages, a so called triple super, in order to obtain better channel selectivity. In the triple super the inventive method would be realized by the second and the third IF-stages where the 2 and 3.IF filters are ceramic filters.

In the table below there is shown different frequency combinations, whereby the examples 1 and 2 were discussed above.

**Table 1:**

| Examples of frequency combinations (frequencies in MHz) | | | | |
|---|---|---|---|---|
| | Example 1 (wide band) | Desired channel Example 2 (narrow) | Neighboring channel Example 3 (narrow) | Neighboring channel Example 4 (narrow) |
| RFIN | 855 | 855 | 854.990 | 855.010 |
| 1.LO | 900 | 899.990 | 899.990 | 899.990 |
| 1.IF | 45 | 44.990 | 45.000 | 44.980* |
| 2.LO | 44.545 | 44.525 | 45.525 | 44.525 |
| 2.IF | 0.455 | 0.465 | 0.475* | 0.445 |

| | | | | |
|---|---|---|---|---|
| * off-band | | | | |

It is understood that the frequencies could be selected in many other combinations, in accordance with equations 1) and 2) above.

The main advantage of the inventive method of the present embodiment is that it requires no switches to change the effective channel bandwidth of the receiver. Thereby crosstalk effects introduced by the extra switches are also avoided. Implementing digitally controlled oscillators it is also easy to programmably adjust the predetermined local oscillator frequency offsets.

## Claims

1. An apparatus for adjusting the operating bandwidth of a radio telephone receiver for operation in at least a first radio telephone system having a first channel spacing and a second radio telephone system having a second, narrower channel spacing; comprising
- first local oscillator means for supplying a first local frequency (1.LO) to first mixing means (2) for channel selection, the mixing means (2) receiving an input signal (RFIN) containing a desired channel signal (fc) and neighboring channel signals (fa, fb) and producing a first IF-signal (1.IF) to be filtered by first bandpass filtering means (4);
- second local oscillator means for supplying a second local frequency (2.LO) to second mixing means (5), the second mixing means (5) receiving the first IF-signal (1.IF) and producing a second IF-signal (2.IF) to be filtered by second bandpass filtering means (7);
- wherein in a first mode the first and second local frequencies (1.LO, 2.LO) are selected so that in operation in the first radio telephone system the first and second band pass filtering means (4,7) attenuate the neighbouring channel signals (fa, fb);
**characterized by**
- means for adjusting the frequency of the first local oscillator means by a first predetermined amount;
- means for adjusting the frequency of the second local oscillator means by a second predetermined amount; and
- wherein in a second mode the magnitude of the first frequency adjustment is selected so that in operation in the second radio telephone system the bandwidth of the first bandpass filtering means (4) is offset from the frequency of the desired channel signal (fc) and the first bandpass filtering means (4) will attenuate one neighboring channel signal (fa) spaced from the desired channel signal (fc) by the second channel spacing and pass the desired channel signal (fc) and the opposite neighboring channel signal (fb) spaced from the desired channel signal (fc) by the second channel spacing, and whereby the magnitude of the offset of the second frequency is selected so that the bandwidth of the second bandpass filtering means (7) is offset from the frequency of the desired channel signal (fc) and the second bandpass filtering means (7) will attenuate the opposite neighboring channel signal (FB) and pass the desired channel signal (FC), essentially without neighboring channel signals (fa, FB).

2. An apparatus as claimed in claim 1, wherein the first and second local frequencies are adjusted in the same direction.

3. An apparatus as claimed in claim 1 or 2, wherein the first local oscillator means and first mixing means and the second local oscillator means and second mixing means comprise the second and third stages respectively in a three-stage mixing arrangement.

4. An apparatus as claimed in any of the preceding claims, wherein the frequencies (1.LO, 2.LO) of the first oscillator means and the second oscillator means are substantially continuously adjustable for example by programmable controlling means.

5. An apparatus as claimed in any of the preceding claims, wherein said bandpass filtering means (4, 7) are crystal filters.

6. An apparatus as claimed in any of claims 1 to 4, wherein the second IF filter is a ceramic filter.

7. An apparatus as claimed in any of claims 1 to 4 and 6, wherein the first IF filter is a saw type filter.

8. An apparatus as claimed in any preceding claim wherein three IF stages are employed, the second and third IF filters being ceramic filters.

9. A method for adjusting the operating bandwidth of a radio telephone receiver for operation in at least a first radio telephone system having a first channel spacing and a second radio telephone system having a second, narrower channel spacing; comprising
- first local oscillator means for supplying a first local frequency (1.LO) to first mixing means (2) for channel selection, the mixing means (2) receiving an input signal (RFIN) containing a desired channel signal (fc) and neighboring channel signals (fa, fb) and producing a first IF-signal (1.IF) to be filtered by first bandpass filtering means (4);
- second local oscillator means for supplying a second local frequency (2.LO) to second mixing means (5), the second mixing means (5) receiving the first IF-signal (1.IF) and producing a second IF-signal (2.IF) to be filtered by second bandpass filtering means (7);
- wherein in a first mode the first and second local frequencies (1.LO, 2.LO) are selected so that in operation in the first radio telephone system the first and second band pass filtering means (4,7) and attenuate the neighbouring channel signals (fa, fb);
the method being **characterized** by the steps of
- adjusting the frequency of the first local oscillator means by a first predetermined amount;
- adjusting the frequency of the second local oscillator means by a second predetermined amount; and
- wherein in a second mode said first frequency offset amount is selected so that in operation in the second radio telephone system the bandwidth of the first bandpass filtering means (4) is offset from the frequency of the desired channel signal (fc) and the first bandpass filtering means (4) will attenuate one neighboring channel signal (fa) spaced from the desired channel signal (fc) by the second channel spacing and pass the desired channel signal (fc) and the opposite neighboring channel signal (fb) spaced from the desired channel signal (fc) by the second channel spacing, whereby said second frequency offset amount is selected so that the bandwidth of the second bandpass filtering means (7) is offset from the frequency of the desired channel signal (fc) and the second bandpass filtering means (7) will attenuate the opposite neighboring channel signal (FB) and pass the desired channel signal (FC), essentially without neighboring channel signals (fa, FB).

## Patentansprüche

1. Apparat zur Einstellung der Betriebsbandbreite eines Funktelefonempfängers für den Betrieb in mindestens einem einen ersten Kanalabstand aufweisenden ersten Funktelefonsystem und einem einen zweiten, schmäleren Kanalabstand aufweisenden zweiten Funktelefonsystem, mit:
ersten Empfangsoszillatormitteln für die Lieferung einer ersten lokalen Frequenz (1.LO) zur Kanalauswahl an erste Mischmittel (2), die ein Eingangssignal (RFIN) erhalten, in dem ein gewünschtes Kanalsignal (fc) und Nachbarkanalsignale (fa, fb) enthalten sind, und die ein durch erste Bandpassfiltermittel (4) zu filterndes erstes IF-Signal (1.IF) erzeugen; und
zweiten Empfangsoszillatormitteln für die Lieferung einer zweiten lokalen Frequenz (2.LO) an zweite Mischmittel (5), die das erste IF- Signal (1.IF) erhalten und ein durch zweite Bandpassfiltermittel (7) zu filterndes zweites IF-Signal (2.IF) erzeugen, wobei in einer ersten Betriebsart die erste und die zweite lokale Frequenz (1.LO,2.LO) derart gewählt werden, daß beim Betrieb im ersten Funktelefonsystem die ersten und zweiten Bandpassfiltermittel (4,7) die Nachbarkanalsignale (fa, fb) dämpfen, **gekennzeichnet durch**
Mittel zur Einstellung der Frequenz der ersten Empfangsoszillatormittel mittels eines ersten vorbestimmten Werts; und
Mittel zur Einstellung der Frequenz der zweiten Empfangsoszillatormittel mittels eines zweiten vorbestimmten Werts, wobei
in einer zweiten Betriebsart die Größe der ersten Frequenzeinstellung derart gewählt ist, daß beim Betrieb im zweiten Funktelefonsystem die Bandbreite der ersten Bandpassfiltermittel (4) von der Frequenz des gewünschten Kanalsignals (fc) versetzt ist, und die ersten Bandpassfiltermittel (4) ein von dem gewünschten Kanalsignal (fc) mit dem zweiten Kanalabstand beabstandetes Nachbarkanalsignal (fa) dämpfen und das gewünsche Kanalsignal (fc) sowie das von dem gewünschten Kanalsignal (fc) mit den zweiten Kanalabstand beabstandete Gegennachbarkanalsignal (fb) durchlassen, wobei der Betrag der Versetzung der zweiten Frequenz derart gewählt wird, daß die Bandbreite der zweiten Bandpassfiltermittel (7) von der Frequenz des gewünschten Kanalsignals (fc) versetzt ist, und wobei ferner die zweiten Bandpassfiltermittel (7) das Gegennachbarkanalsignal (FB) dämpfen und das gewünschte Kanalsignal (FC) im wesentlichen ohne die Nachbarkanalsignale (fa, FB) durchlassen.

2. Apparat nach Anspruch 1, bei dem die erste und die zweite lokale Frequenz in gleicher Richtung eingestellt sind.

3. Apparat nach Anspruch 1 oder 2, bei dem die ersten Empfangsoszillatormittel und die ersten Mischmittel sowie die zweiten Empfangsoszillatormittel und die zweiten Mischmittel jeweils in einer dreistufigen Mischanordnung die zweite und dritte Stufe umfassen.

4. Apparat nach irgendeinem der vorangegangenen Ansprüche, bei dem die Frequenzen (1.LO, 2.LO) der ersten und zweiten Empfangsoszillatormittel im wesentlichen kontinuierlich z.B mittels programmierbarer Steuermittel einstellbar sind.

5. Apparat nach irgendeinem der vorangegangenen Ansprüche, bei dem die Bandpassfiltermittel (4, 7) als Kristallfilter ausgebildet sind.

6. Apparat nach irgendeinem der Ansprüche 1 bis 4, bei dem das zweite IF-Filter als Keramikfilter ausgebildet ist.

7. Apparat nach irgendeinem der Ansprüche 1 bis 4 und 6, bei dem das erste IF-Filter als SAW-Filter ausgebildet ist.

8. Apparat nach irgendeinem der vorangegangenen Ansprüche, mit drei IF-Stufen, wobei das zweite und das dritte IF-Filter als Keramikfilter ausgebildet sind.

9. Verfahren zur Einstellung der Betriebsbandbreite eines Funktelefonempfängers für den Betrieb in mindestens einem einen ersten Kanalabstand aufweisenden ersten Funktelefonsystem und einem einen zweiten, schmäleren Kanalabstand aufweisenden zweiten Funktelefonsystem, mit:
ersten Empfangsoszillatormitteln für die Lieferung einer ersten lokalen Frequenz (1.LO) zur Kanalauswahl an erste Mischmittel (2), die ein Eingangssignal (RFIN) erhalten, in dem ein gewünschtes Kanalsignal (fc) und Nachbarkanalsignale (fa, fb) enthalten sind, und die ein durch erste Bandpassfiltermittel (4) zu filterndes erstes IF-Signal (1.IF) erzeugen; und
zweiten Empfangsoszillatormitteln für die Lieferung einer zweiten lokalen Frequenz (2.LO) an zweite Mischmittel (5), die das erste IF- Signal (1.IF) erhalten und ein durch zweite Bandpassfiltermittel (7) zu filterndes zweites IF-Signal (2.IF) erzeugen, wobei in einer ersten Betriebsart die erste und die zweite lokale Fre quenz (1.LO,2.LO) derart gewählt werden, daß beim Betrieb im ersten Funktelefonsystem die ersten und zweiten Bandpassfiltermittel (4,7) die Nachbarkanalsignale (fa, fb) dämpfen, wobei das Verfahren **dadurch gekennzeichnet** ist, daß folgende Schritte enthalten sind:
Einstellen der Frequenz der ersten Empfangsoszillatormittel mittels eines ersten vorbestimmten Werts; und
Einstellen der Frequenz der zweiten Empfangsoszillatormittel mittels eines zweiten vorbestimmten Werts, wobei
in einer zweiten Betriebsart die Größe der ersten Frequenzversetzung derart gewählt ist, daß beim Betrieb im zweiten Funktelefonsystem die Bandbreite der ersten Bandpassfiltermittel (4) von der Frequenz des gewünschten Kanalsignals (fc) versetzt ist, und die ersten Bandpassfiltermittel (4) ein von dem gewünschten Kanalsignal (fc) mit dem zweiten Kanalabstand beabstandetes Nachbarkanalsignal (fa) dämpfen und das gewünsche Kanalsignal (fc) sowie das von dem gewünschten Kanalsignal (fc) mit den zweiten Kanalabstand beabstandete Gegennachbarkanalsignal (fb) durchlassen, wobei die Größe der zweiten Frequenzversetzung derart gewählt wird, daß die Bandbreite der zweiten Bandpassfiltermittel (7) von der Frequenz des gewünschten Kanalsignals (fc) versetzt ist, und wobei ferner die zweiten Bandpassfiltermittel (7) das Gegennachbarkanalsignal (FB) dämpfen und das gewünschte Kanalsignal (FC) im wesentlichen ohne die Nachbarkanalsignale (fa, FB) durchlassen.

## Revendications

1. Appareil pour ajuster la largeur de bande de fonctionnement d'un récepteur de radiotéléphone pour fonctionnement dans au moins un premier système de radio téléphone ayant un premier espacement de canal et dans un second système de radio téléphone ayant un second espacement de canal plus étroit ; comprenant
- un premier moyen d'oscillateur local pour délivrer une première fréquence locale (1.LO) à un premier moyen de mélange (2) pour sélection de canal, le moyen de mélange (2) recevant un signal d'entrée (RFIN) contenant un signal de canal désiré (fc) et des signaux de canaux voisins (fa, fb) et produisant un premier signal de fréquence intermédiaire (1.IF) qui doit être filtré par un premier moyen de filtrage passe-bande (4) ;
- un second moyen d'oscillateur local pour délivrer une seconde fréquence locale (2.LO) à un second moyen de mélange (5), le second moyen de mélange (5) recevant le premier signal de fréquence intermédiaire (1.IF) et produisant un second signal de fréquence intermédiaire (2.IF) qui doit être filtré par un second moyen de filtrage passe-bande (7) ;
- dans lequel dans un premier mode, les première et seconde fréquences locales (1.LO, 2.LO) sont choisies de sorte qu'en fonctionnement dans le premier système de radiotéléphone, les premier et second moyens de filtrage passe-bande (4, 7) atténuent les signaux de canaux voisins (fa, fb) ;
**caractérisé par**
- un moyen pour ajuster la fréquence du premier moyen d'oscillateur local d'une première valeur prédéterminée ;
- un moyen pour ajuster la fréquence du second moyen d'oscillateur local d'une seconde valeur prédéterminée ; et
- dans lequel dans un second mode, la valeur du premier ajustement de fréquence est choisie de sorte qu'en fonctionnement dans le second système de radiotéléphone, la largeur de bande du premier moyen de filtrage passe-bande (4) est décalée par rapport à la fréquence du signal de canal désiré (fc) et le premier moyen de filtrage passe-bande (4) atténuera un signal de canal voisin (fa) espacé du signal de canal désiré (fc) par l'espacement du second canal et laissera passer le signal de canal désiré (fc) et le signal de canal voisin opposé (fd) espacé du signal de canal désiré (fc) par le second espacement de canal, et d'où il résulte que la valeur du décalage de la seconde fréquence est choisie de sorte que la largeur de bande du second moyen de filtrage passe-bande (7) est décalée par rapport à la fréquence du signal de canal désiré (fc) et le second moyen de filtrage passe-bande (7) atténuera le signal de canal voisin opposé (FB) et laissera le signal de canal désiré (FC) essentiellement sans signaux de canaux voisins (fa, FB).

2. Appareil selon la revendication 1, dans lequel les première et seconde fréquences locales sont ajustées dans la même direction.

3. Appareil selon la revendication 1 ou 2, dans lequel le premier moyen d'oscillateur local et le premier moyen de mélange et le second moyen d'oscillateur local et le second moyen de mélange constituent les second et troisième étages respectivement dans une disposition de mélange à trois étages.

4. Appareil selon l'une quelconque des revendications précédentes, dans lequel les fréquences (1.LO, 2.LO) du premier moyen d'oscillateur et du second moyen d'oscillateur sont ajustables pratiquement en continu par exemple par un moyen de commande programmable.

5. Appareil selon l'une quelconque des revendications précédentes, dans lequel lesdits moyens de filtrage passe-bande (4, 7) sont des filtres à quartz.

6. Appareil selon l'une quelconque des revendications 1 à 4, dans lequel le second filtre de fréquence intermédiaire est un filtre en céramique.

7. Appareil selon l'une quelconque des revendications 1 à 4 et 6, dans lequel le filtre de fréquence intermédiaire est un filtre du type à ondes en surface.

8. Appareil selon l'une quelconque des revendications précédentes, dans lequel trois étages de fréquence intermédiaire sont employés, les second et troisième filtres de fréquence intermédiaire étant des filtres en céramique.

9. Procédé pour ajuster la largeur de bande de fonctionnement d'un récepteur de radiotéléphone pour fonctionnement dans au moins un premier système de radiotéléphone ayant un premier espacement de canal et dans un second système de radiotéléphone ayant un second espacement de canal plus étroit ; comprenant
- un premier moyen d'oscillateur local pour délivrer une première fréquence locale (1.LO) à un premier moyen de mélange (2) pour sélection de canal, le moyen de mélange (2) recevant un signal d'entrée (RFIN) contenant un signal de canal désiré (fc) et des signaux de canaux voisins (fa, fb) et produisant un premier signal de fréquence intermédiaire (1.IF) qui doit être filtré par le premier moyen de filtrage passe-bande (4) ;
- un second moyen d'oscillateur local pour délivrer une seconde fréquence locale (2.LO) à un second moyen de mélange (5), le second moyen de mélange (5) recevant le premier signal de fréquence intermédiaire (1.IF) et produisant un second signal de fréquence intermédiaire (2.IF) qui doit être filtré par un second moyen de filtrage passe-bande (7) ;
- dans lequel dans un premier mode, les première et seconde fréquences locales (1.LO, 2.LO) sont choisies de sorte qu'en fonctionnement dans le premier système de radiotéléphone, les premier et second moyens de filtrage passe-bande (4, 7) atténuent les signaux de canaux voisins (fa, fb) ; le procédé étant caractérisé par les étapes consistant à
- ajuster la fréquence du premier moyen d'oscillateur local d'une première valeur prédéterminée ;
- ajuster la fréquence du second moyen d'oscillateur local d'une seconde valeur prédéterminée ; et
- dans lequel dans un second mode, ladite première valeur de décalage de fréquence est choisie de sorte qu'en fonctionnement dans le second système de radiotéléphone, la largeur de bande du premier moyen de filtrage passe-bande (4) est décalée par rapport à la fréquence du signal de canal désiré (fc) et le premier moyen de filtrage passe-bande (4) atténuera un signal de canal voisin (fa) espacé du signal de canal désiré (fc) par le second espacement de canal et laissera passer le signal de canal désiré (fc) et le signal de canal voisin opposé (fd) espacé du signal de canal désiré (fc) par le second espacement de canal, grâce auquel ladite seconde valeur de décalage de fréquence est choisie de sorte que la largeur de bande du second moyen de filtrage passe-bande (7) est décalée par rapport à la fréquence du signal de canal désiré (fc) et le second moyen de filtrage passe-bande (7) atténuera le signal de canal voisin opposé (FB) et laissera passer le signal de canal désiré (FC), essentiellement sans signaux de canaux voisins (fa, FB).
